# EUROPEAN PATENT APPLICATION

(11) **EP 2 156 736 A1**
(43) Date of publication of application: **24.02.2010**
(21) Application number: 09251976.8
(22) Date of filing: 11.08.2009
(51) Int. Cl.: A01N 25/00, A01N 43/50, A01N 59/26, A23B 7/154, A23B 7/157

(54) **Post harvest treatment of fruit with a mixture of imazalil and a phosphorous acid source**

(30) Priority: 20.08.2008 US 90320 P
(71) Applicant: Plant Protectants, LLC, Visalia, CA 93292-987 (US)
(72) Inventor: Grech, Nigel, M., Visalia, California 93292-987 (US)
(74) Representative: Webb, Andrew John

(57) **Abstract**

Methods for protecting fruit, vegetables and ornamentals against post harvest microbial decay by applying systemic acquired resistance inducers such as phosphorous acid and/or one or more of the alkali metal salts of phosphorous acid in combination with Imazalil.

## Description

The present invention relates to protecting fruit, vegetables and ornamentals against attack by decay-causing organisms such as fungi. In particular, the present invention relates to methods of protecting fruit or vegetables or ornamentals against post harvest microbial spoilage by applying mixtures of systemic acquired resistance inducers in combination with Imazalil.

It is a well-known practice in fruit and vegetable processing to apply anti microbial agents to the surface of freshly harvested fruit and vegetables for the purpose of controlling decay-causing organisms.

Systemic resistance inducers are known to elicit microbial resistance in plants but are not used in post harvest applications in fruit and vegetables because they do not provide control of microorganisms at an acceptable level.

Imazalil as mentioned herein is the generic name of the compound 1-[2-(2,4-dichlorophenyl)-2-(2-propenyloxy)ethyl]-1-imidazole.

With increasing regulatory and environmental pressure being applied on the post harvest fruit and vegetable sectors, many antimicrobial materials are being withdrawn or not reregistered. It is therefore desirable to provide methods of protecting fruit or vegetables or ornamentals against post harvest microbial spoilage using materials that are readily available, of low toxicity and not likely to be banned from registration.

The present invention provides novel methods of reducing microbial spoilage of fruit, vegetables and ornamentals utilizing materials that are of very low mammalian toxicity and are environmentally benign.

The present invention includes methods for protecting fruit, vegetables and/or ornamentals against post harvest microbial decay by applying systemic acquired resistance inducers in combination with Imazalil. In some embodiments the materials applied to the fruit and/or vegetables include Imazalil as well as phosphorous acid and/or its alkali metal salts and/or ammoniacal salts. It has been determined that Imazalil alone helps protect fruits and vegetables from post harvest decay. It has also been determined that phosphorous acid and/or its salts alone also help protect fruits and vegetables from post harvest decay.

The effect of combinations of Imazalil with phosphorous acid (and/or its salts) in the reduction of post harvest spoilage was found to be greater than the sum of the individual effects of Imazalil alone or phosphorous acid (and/or its salts) alone in reducing post harvest spoilage at low or high temperatures.

Embodiments of the present invention are further illustrated by the following non-limiting examples:

### EXAMPLE 1

In example 1, six different treatments (A-F below) were made. There were four replications for each of the six treatments, with each replicate comprising six fruit pieces. Thus, each treatment was applied to 24 fruit pieces. The fruit treated in this example were six freshly harvested, mature lemons. All treatments were conducted at 20° C unless indicated differently.

Treatments were as follows:
A. Fruit immersed in water. Untreated uninoculated control.
B. Fruit immersed in water. Untreated inoculated control.
C. Fruit immersed in a solution containing a 200 ppm suspension of Imazalil for 2 minutes.
D. Fruit immersed in a solution containing 2% (w/w) potassium phosphite for 2 minutes.
E. Fruit immersed in a solution containing a mixture of 1 a 200 ppm suspension of Imazalil and 2% (w/w) potassium phosphite, for 2 minutes.
F. Fruit immersed in a solution containing a mixture of a 200 ppm suspension of Imazalil and 2% (w/w) potassium phosphite, for 2 minutes at 40° C.

After the treatments were applied and left to dry for 10 minutes, treatments B through F were inoculated with a mixed inocula of Green mold (*P. digitatum*) and Blue mold (*P.italicum*). Fruit inoculation was performed by piercing the fruit skin to a depth of 3-5 mm with a needle coated with spores from both fungi. Fruit was incubated at approximately 25°C and decay development measured over 7 days from inoculation.

This experiment was repeated twice.

### Results of Example 1:

**Table 1**

| **(Mean of two experiments)** | | |
|---|---|---|
| Treatment | Lesion diameter (mm) day 7 | % change from inoculated control |
| A | 0 | - |
| B | 61 | - |
| C | 7 | -88 |
| D | 19 | -68 |
| E | 3 | -95 |
| F | 4 | -93 |

### EXAMPLE 2

In example 2, six different treatments (A-F below) were made. There were four replications for each of the six treatments, with each replicate comprising six fruit pieces. Thus, each treatment was applied to 24 fruit pieces. The fruit treated in this example were six freshly harvested, mature lemons. All treatments were conducted at 20° C unless indicated differently.

Treatments were as follows:
A. Fruit immersed in water. Untreated uninoculated control.
B. Fruit immersed in water. Untreated inoculated control.
C. Fruit immersed in a solution containing a 200 ppm suspension of Imazalil for 2 minutes.
D. Fruit immersed in a solution containing 2% (w/w) potassium phosphite for 2 minutes.
E. Fruit immersed in a solution containing a mixture of 1 a 200 ppm suspension of Imazalil and 2% (w/w) potassium phosphite, for 2 minutes.
F. Fruit immersed in a solution containing a mixture of a 200 ppm suspension of Imazalil and 2% (w/w) potassium phosphite, for 2 minutes at 40° C.

After the treatments were applied and left to dry for 10 minutes, treatments B through F were inoculated with a mixed inocula of Green mold (*P. digitatum*) and Blue mold (*P.italicum*). Fruit inoculation was performed by piercing the fruit skin to a depth of 3-5 mm with a needle coated with spores from both fungi. Fruit was incubated at approximately 25°C and decay development measured over 7 days from inoculation.

This experiment was repeated twice.

### Results of Example 2:

**Table 2**

| **(Mean of two experiments)** | | |
|---|---|---|
| Treatment | Lesion diameter (mm) day 7 | % change from inoculated control |
| A | 0 | - |
| B | 47 | - |
| C | 28 | -46 |
| D | 24 | -61 |
| E | 9 | -82 |
| F | 11 | -85 |

### EXAMPLE 3

In example 3, six different treatments (A-F below) were made. There were four replications for each of the six treatments, with each replicate comprising six fruit pieces. Thus, each treatment was applied to 24 fruit pieces. The fruit treated in this example were six freshly harvested, mature Navel oranges. All treatments were conducted at 20° C unless indicated differently.

Treatments were as follows:
A. Fruit immersed in water. Untreated uninoculated control.
B. Fruit immersed in water. Untreated inoculated control.
C. Fruit immersed in a solution containing a 200 ppm suspension of Imazalil for 2 minutes.
D. Fruit immersed in a solution containing 2% (w/w) potassium phosphite for 2 minutes.
E. Fruit immersed in a solution containing a mixture of 1 a 200 ppm suspension of Imazalil and 2% (w/w) potassium phosphite, for 2 minutes.
F. Fruit immersed in a solution containing a mixture of a 200 ppm suspension of Imazalil and 2% (w/w) potassium phosphite, for 2 minutes at 40° C.

After the treatments were applied and left to dry for 10 minutes, treatments B through F were inoculated with a mixed inocula of Green mold (*P. digitatum*) and Blue mold (*P.italicum*). Fruit inoculation was performed by piercing the fruit skin to a depth of 3-5 mm with a needle coated with spores from both fungi. Fruit was incubated at approximately 25°C and decay development measured over 7 days from inoculation.

This experiment was repeated twice.

### Results of Example 3:

**Table 3**

| **(Mean of two experiments)** | | |
|---|---|---|
| Treatment | Lesion diameter (mm) day 7 | % change from inoculated control |
| A | 0 | - |
| B | 51 | - |
| C | 39 | -83 |
| D | 28 | -74 |
| E | 15 | -86 |
| F | 10 | -79 |

### EXAMPLE 4

In example 4, six different treatments (A-F below) were made. There were four replications for each of the six treatments, with each replicate comprising six fruit pieces. Thus, each treatment was applied to 24 fruit pieces. The fruit treated in this example were six freshly harvested, mature Navel oranges. All treatments were conducted at 20° C unless indicated differently.

Treatments were as follows:
A. Fruit immersed in water. Untreated uninoculated control.
B. Fruit immersed in water. Untreated inoculated control.
C. Fruit immersed in a solution containing a 200 ppm suspension of Imazalil for 2 minutes.
D. Fruit immersed in a solution containing 2% (w/w) potassium phosphite for 2 minutes.
E. Fruit immersed in a solution containing a mixture of 1 a 200 ppm suspension of Imazalil and 2% (w/w) potassium phosphite, for 2 minutes.
F. Fruit immersed in a solution containing a mixture of a 200 ppm suspension of Imazalil and 2% (w/w) potassium phosphite, for 2 minutes at 40° C.

After the treatments were applied and left to dry for 10 minutes, treatments B through F were inoculated with a mixed inocula of Green mold (*P. digitatum*) and Blue mold (*P.italicum*). Fruit inoculation was performed by piercing the fruit skin to a depth of 3-5 mm with a needle coated with spores from both fungi. Fruit was incubated at approximately 25°C and decay development measured over 7 days from inoculation.

This experiment was repeated twice.

### Results of Example 4:

**Table 4**

| **(Mean of two experiments)** | | |
|---|---|---|
| Treatment | Lesion diameter (mm) day 7 | % change from inoculated control |
| A | 0 | - |
| B | 68 | - |
| C | 43 | -45 |
| D | 40 | -89 |
| E | 12 | -94 |
| F | 6 | -91 |

It is to be appreciated that although an exemplary solution of 2% w/w potassium phosphite was used in the exemplary experiments herein, numerous other salts of phosphorous acid may also be effectively used. It is also to be appreciated that any suitable phosphorous acid source may be effectively used in a range of between about 0.1% and about 10% w/w phosphorous acid equivalent, preferably in a range of between about 1% and about 3% w/w phosphorous acid equivalent, more preferably in a range of between about 2% and about 3% w/w phosphorous acid equivalent. Similarly, the Imazalil source may be effectively used in a range of between about 10 mg/L and about 10,000 mg/L. Different combinations of these source materials over these ranges are contemplated within the scope of the present invention. Although the mixture in the examples is applied by submersion in an aqueous solution other forms of application of the mixture may be used including drenching, spraying or application of a wax coating formulated with the mixture. Heating the mixture to a temperature preferably in the range of between about 30° and about 50° C such as about 40° C for example heating an aqueous solution in such a range in accordance with the examples prior to submersion, drenching or spraying may serve to increase decay control efficacy. The treatment may be combined with other post harvest treatment agents such as a fungicide or biocide which may therefore be included in the mixture

Solid forms of the invention may be obtained, for example, by evaporating any of the solutions identified in the examples.

It is to be appreciated that, although the invention has been described in terms of exemplary embodiments, it is not limited thereto.

## Claims

1. A method for protecting one of a fruit, a vegetable or an ornamental against post harvest microbial spoilage by applying thereto a mixture comprising an Imazalil source and a phosphorous acid source selected from the group of phosphorous acid, an alkali metal salt of phosphorous acid, and combinations thereof.

2. A method according to claim 1 wherein said mixture comprises an aqueous solution.

3. A method according to claim 2 wherein said mixture comprises an aqueous solution wherein said Imazalil source is present in a range of between about 10 mg/L and about 10,000 mg/L, and wherein said phosphorous acid source is present in a range of between about 0.1 % and about 10% w/w phosphorous acid equivalent.

4. A method according to claim 2 or claim 3 comprising the step of at least partially immersing said fruit, vegetable or ornamental in said solution for a time interval between about 5 seconds and about 10 minutes.

5. A method according to claim 4 comprising the step of at least partially immersing said fruit, vegetable or ornamental in said solution for a time interval between about 1 minute and about 3 minutes.

6. A method according to claim 2 or claim 3 wherein the fruit, vegetable or ornamental is drenched with the mixture.

7. A method according to claim 2 or claim 3 wherein the fruit, vegetable or ornamental is sprayed with the mixture.

8. A method according to claim 1 comprising the steps of:
preparing a composition comprising an Imazalil source wherein said Imazalil source is present in a range of between about 10 mg/L and about 30,000 mg/L; and a phosphorous acid source selected from the group of phosphorous acid, an alkali metal salt of phosphorous acid, and combinations thereof, wherein said phosphorous acid source is present in a range of between about 0.1 % and about 10% w/w phosphorous acid equivalent;
incorporating the composition into a wax coating; and
applying said coating to said fruit, vegetable or ornamental.

9. A method according to any preceding claim wherein said phosphorous acid source is present in a range of between about 1% and about 3% w/w phosphorous acid equivalent, preferably between 2% and 3% w/w phosphorous acid equivalent.

10. A method according to any preceding claim wherein said Imazalil source is present in an amount of about 200 ppm, and wherein said phosphorous acid source is present in a range of between about 1% and about 3% w/w phosphorous acid equivalent.

11. A method according to any preceding claim wherein said Imazalil source is present in an amount of about 200 ppm, and wherein said phosphorous acid source is present in an amount of about 2% w/w phosphorous acid equivalent.

12. A method according to any preceding claim wherein said mixture further comprises a fungicide.

13. A method according to any preceding claim wherein said mixture further comprises a biocide.

14. A method according to any preceding claim wherein said mixture is provided in one of a solid state and a liquid state.

15. A method according to any preceding claim wherein said mixture is heated to a temperature of between about 30° and about 50° C to increase decay control efficacy.
